# EUROPÄISCHE PATENTANMELDUNG

(11) **EP 4 632 143 A2**
(43) Veröffentlichungstag der Anmeldung: **15.10.2025**
(21) Anmeldenummer: 25162835.0
(22) Anmeldetag: 11.03.2025
(51) Int. Cl.: D06N 1/00, C14C 1/00, D06N 3/00, B32B 5/02, D06N 3/02

(54) **NACHHALTIGE LEDERALTERNATIVE**

(30) Priorität: 11.03.2024 DE 102024106872
(71) Anmelder: Keppeler, Matthias, 88145 Opfenbach (DE)
(72) Erfinder: Keppeler, Matthias, 88145 Opfenbach (DE)
(74) Vertreter: Riebling, Peter

(57) **Zusammenfassung**

Verfahren zur Herstellung eines lederähnlichen geschichteten Komposit-Materials (26), umfassend die folgenden Schritte:
1.1 Zugabe und Lösen von pulverförmigen Chitosan (4) in verdünnter Säure (5') zur Erzeugung einer Lösung (25),
1.2 Zerkleinern und Mischen von bakterieller Nanocellulose (7) mit Wasser (8) zur Erzeugung einer Mischung (10, 10'),
1.3 Verrühren der Lösung (25) und der Mischung (10, 10') zur Erzeugung eines Polyelektrolytkomplex (11),
1.4 flächiges Auftragen einer ersten Teilmenge des Polyelektrolytkomplexes (11) auf eine Trägerplatte (13),
1.5 Auflegen eines Vlieses (15) auf den zuvor aufgetragenen Polyelektrolytkomplex (11)
1.6 Zugabe und Verrühren von Naturfasern (17) in eine zweite Teilmenge des Polyelektrolytkomplexes (11) und Verrühren zur Erzeugung eines Gemisches (16, 16')
1.7 flächiges Auftragen des Gemisches (16, 16') auf die Oberseite des Vlieses (15)
1.8 Trocknungsvorgang und
1.9 Entnahme des fertigen Komposit-Materials (26)

## Beschreibung

Gegenstand der Erfindung ist ein lederähnliches Komposit-Material sowie ein Verfahren zur Herstellung eines solchen Materials als nachhaltige Lederalternative nach den Oberbegriffen der Patentansprüche 1 und 11.

Die Mode- und Textilindustrie steht vor wachsenden Herausforderungen im Hinblick auf die Nachhaltigkeit ihrer Materialien. Tierisches Leder und auf Erdöl basierendes Kunstleder sind zwei gängige Materialien, die oft in der Herstellung von Kleidung, Accessoires und Möbeln Verwendung finden. Obwohl beide Materialien ihre Vorzüge haben, sind sie nicht ohne erhebliche Nachteile.

Die Produktion von tierischem Leder benötigt große Mengen an Wasser und Energie und verursacht einen sehr hohen CO2 Ausstoß.

Darüber hinaus trägt die intensive Tierhaltung zur Entwaldung, Bodendegradation und Wasserverschmutzung bei.

Ein weiteres Problem ist die Gerbung des Leders. Traditionelle Gerbverfahren nutzen oft giftige Chemikalien wie Chrom, die nicht nur für die Umwelt schädlich sind, sondern auch für die Gesundheit der Arbeiter in den Gerbereien gefährlich sein können. Alternativ eingesetzte pflanzliche Gerbstoffe sind zwar weniger schädlich, erfordern jedoch oft mehr Zeit und Ressourcen. Die Lederindustrie wird oft mit Massentierhaltung und Tierleid in Verbindung gebracht, was immer mehr Menschen dazu bewegt von tierischem Leder Abstand zu nehmen.

Auch aus Kostengründen wurde im 20. Jahrhundert ein neues Kunstledermaterial entwickelt. Dieses Material, welches oft aus Polyurethan (PU) oder Polyvinylchlorid (PVC) besteht, wird aus Erdöl hergestellt, wobei jedoch die Vielzahl an Problemen, die aus Erdöl hergestellte Produkte mit sich bringen, bekannt sind. Neben den gravierenden Umweltschäden, die bei der Gewinnung und Umwandlung von Erdöl entstehen, verursacht auch die Entsorgung Probleme, da viele aus Erdöl hergestellten Produkte, gerade auch Kunstleder, nur sehr schwierig oder gar nicht zu recyceln sind.

Ein immer wichtiger werdender Nachteil bei Kunstleder ist die Freisetzung von Mikroplastikpartikeln sowie gesundheitsschädlichen Weichmachern, sowohl durch Abnutzung im Laufe der Benutzung als auch bei nicht fachgerechter Entsorgung der Kunstlederprodukte, wie z.B. auf Deponien. Winzige Partikel können sich im Laufe der Zeit aus dem Material lösen und gelangen dann in Gewässer, wo sie ökologische Schäden verursachen und möglicherweise in die Nahrungskette gelangen können.

Zudem bestehen die meisten Lederalternativen aus verschiedenen Schichten unterschiedlicher Materialien, was ein Recycling sehr schwierig und teuer macht.

Auch sind vollständig biobasierte Lederalternativen bekannt, welche jedoch oft Nachteile hinsichtlich der Wasserbeständigkeit aufweisen.

So zeigt die DE 10 2022 134 633 A1 ein Kunstleder bestehend aus einem Bindemittel, ein zumindest teilweise innerhalb des Bindemittels angeordnetes Füllmaterial, umfassend ein anorganisches Salz, ein Fasermaterial, Lignin und/oder eine Kombination von pflanzlichem Blattmaterial und einem Gummimaterial. Es wird somit ein Schichtverbund aus mehreren Schichten gebildet, insbesondere aus einem Bindemittel, ein Füllmaterial sowie einem Feuchthaltemittel. Das Bindemittel dient als Matrixmaterial zur Aufnahme des Füllmaterials, welches dem Kunstleder die mechanische Stabilität verleiht. Durch die Einbettung des Füllmaterials in das Bindemittel wird eine flexible, d.h. elastisch zieh- und biegbare, jedoch stabile Schicht gebildet. Die dritte, optionale Komponente, das Feuchthaltemittel, verhindert oder verlangsamt eine Austrocknung des Kunstleders.

Weiterer Nachteil dieses Kunstleders ist, neben dem aufwendigen Herstellungsverfahren, dass es nicht vollständig recycelt werden kann.

Der Erfindung liegt deshalb die Aufgabe zugrunde, ein Kunstledermaterial, der eingangs genannten Art, so weiter zu bilden, dass unter Berücksichtig einer möglichen Belastung der Umwelt eine vereinfachte Herstellung des Materials sowie ein mögliches Recycling möglich ist.

Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

Erfindungsgemäß umfasst das Verfahren zur Herstellung eines lederähnlichen geschichteten Komposit-Materials die folgenden Schritte:
1.1 Zugabe und Lösen von pulverförmigen Chitosan in verdünnter Säure zur Erzeugung einer Lösung,
1.2 Zerkleinern und Mischen von bakterieller Nanocellulose mit Wasser zur Erzeugung einer Mischung,
1.3 Verrühren der Lösung und der Mischung zur Erzeugung eines Polyelektrolytkomplex,
1.4 flächiges Auftragen einer ersten Teilmenge des Polyelektrolytkomplexes auf eine Trägerplatte,
1.5 Auflegen eines Vlieses auf den zuvor aufgetragenen Polyelektrolytkomplex
1.6 Zugabe und Verrühren von Naturfasern in eine zweite Teilmenge des Polyelektrolytkomplexes und Verrühren zur Erzeugung eines Gemisches
1.7 flächiges Auftragen des Gemisches auf die Oberseite des Vlieses
1.8 Trocknungsvorgang und
1.9 Entnahme des fertigen Komposit-Materials.

Bevorzugt wird das Polyelektrolytkomplex in Schritt 1.4 mit einer Dicke zwischen 1mm und bis 20mm, besonders bevorzugt mit 1mm und bis zu 5mm flächig auf die Trägerplatte aufgetragen wird.

Bevorzugt handelt es sich bei der Säure um eine mit Wasser verdünnte Essigsäure.

Es wird bevorzugt aus der Mischung von Essigsäure und Chitosan Chitosanacetat gebildet, welches durch einen weiteren Verfahrensschritt deacetyliert wird, um die Wasserbeständigkeit des Materials zu steigern.

Dieser Verfahrensschritt kann alternativ durch ein Aussetzen des Materials in einer Umgebung mit entsprechender Luftfeuchtigkeit erfolgen. In einer weiteren Alternative kann das fertige Material noch ausgewaschen oder in eine leichte Base getaucht werden.

Bevorzugt wird im Schritt 1.1 oder auf das Vlies vor Schritt 1.7 ein Farbpigmentzugemischt.

Diese beiden Möglichkeiten sind wie folgt:
- Die Farbpigmente werden in die Essigsäure gemischt und zwar vor dem Zugeben des Chitosans. Optional kann zusätzlich Farbe in das Wasser gemischt werden, mit welchen die BNC verdünnt wird. Der gefärbte PEC kann dann überall verwendet werden oder nur als erste Schicht Anwendung finden.
   Dies hat den Vorteil, dass es die Festigkeit nicht beeinträchtigt und es keine Veränderung der Zusammensetzung beim Recycling gibt und dieses technisch vereinfacht wird.
- Oder die Farbe wird auf das Vlies vor dem Auflegen aufgetragen, womit keine Farbe im PEC vorhanden ist. Dies hat den Vorteil, dass die Pigmente nur dort aufgebracht werden, wo sie gebraucht werden.

Beispielsweise wird Eisenoxidbraun verwendet, d.h. ein braunes Pigment, welches sich nicht so einfach aus dem Material auswaschen lässt.

Alternativ zu Farbpigmenten kann auch ein Farbstoff verwendet werden. Beispielsweise wird Zuckerkulör verwendet, d.h. ein brauner Farbstoff, welcher sich auch aus einem hydrophobierten Material auswaschen lässt.

Bevorzugt sind Zuckeralkohole (Alditole) wie Sorbit, Xylit, Isomalt oder Glycerin als Feuchtehaltemittel enthalten.

In einer weiteren Variante wird als zusätzlicher Verfahrensschritt das Vlies zusätzlich vor dem Auftragen mit Wasser durchfeuchtet.

In einer weiteren Variante wird ein zweites Vlies, als vierte Schicht auf den Schichtaufbau gelegt, um ein höherwertiges Endprodukt zu erhalten.

Bevorzugt handelt es sich somit um ein lederähnliches Komposit-Material, bestehend aus einer ersten unterseitigen Schicht aus einem Polyelektrolytkomplex, auf das als zweite Schicht ein Vlies aufgelegt ist und auf dessen Oberseite, als dritte Schicht ein mit Naturfasern angereicherter weiterer Polyelektrolykomplex aufgetragen ist.

Das Material besteht aus einem Schichtaufbau mit mindestens drei verschiedenen Schichten. Bevorzugt handelt es sich somit um einen Schichtaufbau mit einem hohen Anteil an Baumwollfasern, welche zur Stabilisierung des Materials beitragen.

Durch die Verwendung von Baumwollfasern kann der Schichtaufbau wieder zerkleinert werden und die Bestandteile können in einem Recyclingprozess erneut zur Herstellung eines Schichtaufbaus verwendet werden.

Die oberste Schicht ist sehr dünn und besteht aus Chitosan und durch Bakterien hergestellte Nanocellulose (im Folgenden mit BNC abgekürzt). Diese Schicht sorgt für die Wasser- und schmutzabweisenden Eigenschaften des Materials. Sie wird später durchsichtig.

Die zweite Schicht ist ein dünnes Vlies aus optional recycelten Baumwollfasern. Dieses Vlies wird in die Chitosan- BNC Mischung getaucht und saugt sich damit voll. Diese Schicht ist verantwortlich für eine homogene Oberfläche und sorgt für eine angenehme Optik sowie Haptik des Materials.

Die dritte Schicht besteht aus einer Chitosan- BNC Mischung mit lose verteilten und optional recycelten Baumwollfasern. Sie wird, im Verhältnis zu den anderen beiden Schichten, dick aufgetragen und nimmt die auf das Material wirkenden Kräfte auf.

Zuvor recyceltes Material kann in diese Schicht mit eingearbeitet werden oder die Schicht besteht ausschließlich aus recyceltem Material.

Am Ende des Produktlebenszyklus des Endproduktes, was z.B. eine Tasche, ein Portemonnaie oder sonstige Accessoires sein kann und welche aus der Kunstlederalternative hergestellt wurden, können diese recycelt und während der Herstellung beigemischt werden. Auch Rückstände von Baumwollstoffen, welche nicht Bestandteile des Schichtaufbaus gewesen sind, können mit recycelt werden.

Das Herstellungsverfahren benötigt keine zusätzliche Zuführung von Wärme, wodurch eine energiearme und somit C02-arme Herstellung möglich ist.

Das Material kann mit herkömmlichen Nähmaschinen, Scheren, Fäden etc. bearbeitet werden. Zudem kann es beliebig eingefärbt werden.

Chitosan wird durch Deacetylierung aus Chitin gewonnen. Dies kann mit (heißer) Natronlauge oder enzymatisch erfolgen. Technisch kommen beide Verfahren zum Einsatz, mengenmäßig ist jedoch das alkalische Verfahren bevorzugt.

Chitin ist das zweithäufigste Biopolymer auf der Erde (nach Zellulose) und kommt in den Exoskeletten von Insekten, Muscheln oder Zellwänden von Pilzen vor. In manchen Pilzen kommt auch das reine Chitosan in kleinen Mengen vor.

Chitosan ist ein Polyaminosaccharid und besteht aus linear miteinander verbundenen Glucosamin-Monomeren. Durch die Deacytelierung werden viele der Acetylgruppen des Chitins entfernt, wodurch freie Amingruppen entstehen.

Diese Amingruppen sind sehr reaktionsfreudig, wodurch das Chitosan chemisch modifiziert werden kann. Dieses Verfahren verändert auch die Länge der Polymerkette, wodurch die Masseneigenschaften und die Löslichkeit weiter eingestellt werden kann.
Durch die Deacytelierung wird erreicht, dass hochmolekulares Chitosan in Säuren gelöst werden kann. Mit abnehmender molarer Masse wird es sogar in Wasser löslich. Der Deacetylierungsgrad und das Molekulargewicht sind zwei wichtige Parameter, die die Eigenschaften von Chitosan beeinflussen.

Der Deacetylierungsgrad bezieht sich auf den Prozentsatz der acetylierten Gruppen, die in Chitin durch Abspaltung von Azetylgruppen entfernt wurden, um Chitosan zu bilden. Chitin besteht aus einer Kette von β-1,4-verknüpften N-Acetylglucosamin-Einheiten. Beim Deacetylierungsprozess werden einige dieser Acetylgruppen durch alkalische Hydrolyse entfernt, und je höher der Prozentsatz der entfernten Gruppen ist, desto höher ist der Deacetylierungsgrad.

Der Deacetylierungsgrad wird normalerweise in Prozent ausgedrückt und kann einen Einfluss auf die physikalischen und chemischen Eigenschaften von Chitosan haben. Ein höherer Deacetylierungsgrad führt zu einer stärkeren Hydrophilie, höherer Löslichkeit in sauren Medien und einer verbesserten Reaktivität gegenüber anderen Substanzen.

Abgesehen von Pflanzen wird Cellulose auch von bestimmten Bakterien produziert. Diese Cellulose wird entweder als bakterielle Cellulose (BC) oder bakterielle Nanocellulose (BNC) bezeichnet. Bakterien sind am effizientesten, wenn sie über eine reichliche Kohlenstoffquelle und eine minimale Stickstoffquelle verfügen. Die anderen wichtigen Umweltfaktoren, die die Zelluloseproduktion beeinflussen, sind pH-Wert, Temperatur und gelöster Sauerstoff.

Bevorzugt wird bei dem erfindungsgemäßen Verfahren zerkleinerte bakterielle Nanocellulose (BNC) (gewonnen aus acetobacter xylinum, acetobacter hansenii, acetobacter pasteurianu, Gluconacetobacter xylinum etc. mit Glucose oder Fruktose als Kohlenstoffquelle) verwendet und mit Wasser von 1 bis 99 Gew.% gemischt.

Der Stamm acetobacter xylinum ist in der Lage, aus einer Kohlenstoffquelle wie Glucose, Cellulose in einem Temperaturbereich von 25°C bis 30°C und einem pH-Bereich von 4,5 bis 7,5 herzustellen. Dabei bilden die Bakterien am Übergang von wässrigem Nährmedium zu Luft dünne Fäden aus reiner Cellulose. Diese Fäden verweben sich zu einem dichten Netz an Cellulosefäden.

Der Abstand der Cellulosefäden voneinander beträgt dabei weniger als ein Mikrometer.

Bakterielle Cellulose ist ein geradkettiges Polysaccharid mit der gleichen chemischen Struktur wie Cellulose, die aus Pflanzen gewonnen wird. Bakterielle Cellulose hat jedoch den Vorteil, dass sie frei von Lignin, Pektin, Hemicellulose und anderen biogenen Produkten ist.

Auch der Pilz, der bei der Fermentation des bekannten Kombucha Tees entsteht, besteht aus bakteriell erzeugter Nanocellulose. Allerdings ist dieser auch als SCOBY bekannte Pilz mit vielen Hefepilzen verunreinigt, sodass er für medizinische und industrielle Anwendungen nur eine Nebenrolle spielt.

Bevorzugt werden für das Verfahren Baumwollfasern verwendet. Diese können z.B. durch mechanisches Recycling von Altkleidern und Produktionsabfällen gewonnen werden.

Bei einem derartigen Recyclingvorgang drehen sich große, mit Nadeln ausgerüstete, Walzen, gegengleich zueinander und reißen die vorgeschnittenen Textilien auseinander. Dadurch werden die einzelnen Baumwollfasern freigelegt, welche auch als Reißfaser bezeichnet werden.

Chitosan liegt in Pulverform vor und wird in 1% Essigsäure gelöst. Für diesen Schritt wird die organische Säure in einem großen Behälter mit Wasser soweit verdünnt, bis sich ein pH-Wert zwischen zwei und sechs einstellt. Als nächstes werden Farbpigmente zugemischt. Dann erst wird das Chitosan in Pulverform hinzugegeben. Beispielsweise 1g Chitosan Pulver auf 100ml 1% Essigsäure. Die Essigsäure kann mit normalem Leitungswasser verdünnt werden, es ist kein destilliertes Wasser notwendig.

Wird z.B. Essigsäure (CH₃COOH) verwendet, reagiert diese mit den Aminogruppen des Chitosans und bildet das Chitosanacetat-Salz. Dabei nehmen die Amino-Gruppen Protonen von der Essigsäure auf. Essigsäure (CH3COOH) gibt ein Proton ab (H+), das dann von der Aminogruppe aufgenommen wird (NH2→NH3+). Die protonierten Aminogruppen führen zur Bildung von Ammoniumionen (NH3+), wodurch das Chitosan positiv geladen wird. Die positive Ladung auf dem Chitosan reduziert die elektrostatische Abstoßung zwischen den Polymerketten und erleichtert die Dissoziation und die Wechselwirkung mit Wasser. Diese Reaktion führt dazu, dass Chitosan wasserlöslich wird.
Die Löslichkeit des protonierten Chitosans in Wasser ist reversibel und hängt vom pH-Wert der Umgebung ab. Bei höheren pH-Werten ist Chitosan oft unlöslich, da die Aminogruppen nicht protoniert sind. Allerdings gibt es auch hier spezielle Chitosan-Derivate, die sich bei höheren pH-Werten in Wasser lösen.

Mit einem eingesetzten externen Rührgerät und gelegentlichen Umrühren wird der Prozess beschleunigt.

Um den Energieverbrauch zu reduzieren kann auf den Einsatz von Rührgeräten oder Mixern verzichtet werden. Ohne Rührgeräte dauert es 1 bis 2 Wochen bis das Chitosan vollständig gelöst wurde.

Es sind viele verschiedene Chitosansalze bekannt. Je nachdem welche Säure verwendet wird, bilden sich andere Chitosansalze. Wenn Chitosan mit Salzsäure (HCl) reagiert, entsteht Chitosanhydrochlorid.

Chitosansulfat entsteht durch Reaktion von Chitosan mit Schwefelsäure (H₂SO₄). Durch Reaktion mit Phosphorsäure (H₃PO₄) kann Chitosanphosphat gebildet werden. Chitosancitrat entsteht durch die Reaktion von Chitosan mit Citronensäure (C6H8O7).

Weitere Säuren sind weichmachende Säuren wie Milchsäure oder Citronensäure, welche in geringen Mengen beigemischt werden können.

Anschließend wird der an einer Oberfläche eines Nährmediums vorhandene BNC-Film aus dem Bottich entnommen, mit Wasser gereinigt und gemeinsam mit weiterem Wasser in einem Mixer zerkleinert bis sich ein homogener Brei ergibt. Beispielhaft wird aufgeführt, dass 100g (aufgrund günstigerer Transportbedingungen im Faktor 1:3 komprimiertes) bakterielle Nanocellulose (BNC) Sheet 24 Stunden in Wasser eingelegt werden und anschließend mit 200g Wasser in einem Hochgeschwindigkeitsmixer 5 Minuten gemixt werden, bis ein homogener Brei entsteht. Dieser Brei ist so fein, dass die BNC Bestandteile nicht mehr zu erfühlen sind.

Der BNC Brei wird nun mit dem gelösten Chitosan vermischt.

Es wird ein Polyelektrolytkomplex aus Chitosan, BNC und Essigsäure gebildet. In dem anschließend getrockneten Material treten im Wesentlichen Wasserstoffbrückenbindungen, Ionenbindungen sowie Schiff-Base-Verbindungen zwischen Chitosan und der Cellulose auf.
Aufgrund der antibakteriellen und fungiziden Eigenschaften des Chitosans kann diese Mischung auch kurze Zeit gelagert werden, ohne dass es zu Schimmelbildung kommt.

Ein Büschel loser Baumwollfasern (optional recycelt) wird dann mit dem Chitosan-Cellulose Gemisch verrührt, so dass sich ein Chitosan-Cellulose-Baumwollfasergemisch ergibt. Für diesen Schritt wird einem Teil der Chitosan-BNC-Mischung unter ständigem Rühren die losen Baumwollfasern hinzugegeben. Um später eine homogenere dritte Schicht zu erreichen, kann ein Teil der Baumwollfasern vor dem Vermischen noch auf eine kürzere Faserlänge geschnitten werden.

Die vorbereiteten Substanzen werden nun mit Hilfe einer Trägerplatte zu einem Schichtaufbau zusammengesetzt.

### 1.Schicht

Zuerst wird für die erste Schicht die Chitosan-BNC Mischung (Polyelektrolytkomplex) auf die Trägerplatte aufgetragen. Dies kann mittels verschiedener Beschichtungsverfahren (Schlitzdüsenbeschichtung, Walzenauftragsbeschichtung etc.) geschehen.

### 2. Schicht

Darauf wird für die zweite Schicht ein dünnes Vlies aus recycelten Baumwollfasern gelegt. Dieses kann z.B. kontinuierlich von einer Rolle abgewickelt werden. Das Vlies saugt sich in wenigen Sekunden mit der Chitosan- BNC-Mischung voll und wird an den Plattenübergängen abgeschnitten. So wird der Chitosan-BNC-Film besser stabilisiert.

### 3. Schicht

Über eine Düse, beispielsweise eine Schlitzdüse, werden nun die mit Chitosan-BNC-Mischung vermischten Baumwollfasern aufgetragen. Danach wird diese dritte Schicht mittels Walzen oder flachen flexiblen Metall-/Kunststoff-Spachteln abgestrichen und verdichtet.

Alle Schritte finden bei Raumtemperatur statt. Es wird keine zusätzliche Energiezufuhr in Form von Wärme benötigt. So soll der Energieverbrauch des Endmaterials niedrig gehalten werden.

Die Trägerplatten werden anschließend in Regalen ca. zwei Wochen bei Raumtemperatur getrocknet.

Dann Entnahme des Komposit-Materials von der Trägerplatte - bereit für Zuschnitt und Nähen - oder weitere 2 Wochen nachtrocknen.

Nach einem Monat ist das Komposit-Material bereit für Alltagsanwendungen - Endfest ist es nach mehreren Wochen.

Nach der Trocknung ist das Material mit dem Schichtaufbau bei üblicher Luftfeuchtigkeit relativ steif. Damit das Material flexibler wird, wird es von der wiederverwendbaren Trägerplatte abgezogen und einer Nachbehandlung unterzogen, bei der es um 180° um dünne Rundstäbe bzw. Umlenkstäbe gezogen wird.

Dabei wird die steife Chitosan-BNC Matrix aufgebrochen. Entlang von Bruchlinien entstehen Falten, wobei das Material eine derartige Behandlung ohne zu reißen übersteht und die Falten die mechanische Festigkeit nicht verändern.
Durch die Falten entsteht eine hautähnliche Optik wie man es von tierischem Leder kennt, da die natürliche Narbung des Leders imitiert wird.

Auch kann die Trägerplatte neben einer glatten Oberfläche auch Vertiefungen aufweisen. So können Muster, wie z.B. eine Schlangenhaut imitiert und eingebracht werden. Alternativ kann ein Muster auch nach dem Trocknen eingeprägt werden.

Zur Unterstützung des Trocknungsvorgangs kann die Umgebungsluft über langsam drehende Ventilatoren leicht verwirbelt werden, um einen kontinuierlichen Luftstrom zu erzeugen. Eine zu schnelle Trocknung führt allerdings zu Schrumpfungen und das Material kann sich einrollen, da das sich im Material befindliche Wasser keine Zeit hat an die Stellen zu wandern, wo Wasser bereits verdunstet ist. Auf speziellen Trocknungsanlagen oder Erwärmung des Trockenraumes über normale Raumtemperatur hinaus wird bewusst verzichtet, um den Energieverbrauch des Herstellungsverfahrens niedrig zu halten.
Wenn Essigsäure zur Protonierung des Chitosan verwendet wurde, befindet sich auf der Trägerplatte eine getrocknete Mischung aus Chitosanacetat, BNC und den Baumwollfasern. Dieses Material besitzt bereits alle notwenigen Eigenschaften um als Lederimitat verwendet werden zu können. Es wäre allerdings nicht wasserresistent, da sich bei Kontakt mit Wasser das Chitosanacetat im Wasser auflösen würde.

Das Chitosanacetat muss daher deacetyliert werden, um wieder wasserfest zu werden. Dies bedeutet, dass das Chitosanacetat wieder in ursprüngliches Chitosan umgewandelt werden muss. Normalerweise werden hierzu leichte Basen wie Natriumhydroxid (NaOH) verwendet. Der Chitosanacetatfilm wird dazu in eine wässrige NaOH-Lösung getaucht. In dieser Reaktion wird das Natriumhydroxid (NaOH) verwendet, um die Acetylgruppen von Chitosanacetat zu hydrolysieren. Das Ergebnis ist Chitosan und Natriumacetat (NaOAc), welches meist mit Wasser ausgewaschen wird. Dieser Vorgang muss mehrmals wiederholt werden.

Die reine Luftfeuchtigkeit reicht in der Regel nicht aus, um eine signifikante Deacetylierung von Chitosanacetat zu bewirken, es sei denn, die Bedingungen sind extrem feucht und langfristig.

Die Verwendung eines hygroskopischen Stoffes in Kombination mit Chitosanacetat kann die Deacetylierung über Luftfeuchtigkeit beschleunigen. Ein hygroskopischer Stoff ist eine Substanz, die Wasser aus der Umgebung absorbiert. Wenn diese hygroskopische Substanz mit Chitosanacetat vermischt und dann der Luftfeuchtigkeit ausgesetzt wird, kann sie die Wasseraufnahme erhöhen und so den Prozess der Deacetylierung beschleunigen.

Die bakterielle Nanocellulose ist beispielsweise so ein hygroskopischer Stoff. Der hygroskopische Stoff wirkt als Feuchthaltemittel, indem er Wasser anzieht und in das Chitosanacetat einführt. Das zusätzliche Wasser fördert die Hydrolyse der Acetylgruppen, was zur Deacetylierung führt.

Dabei werden die Acetylgruppen des Chitosanacetat hydrolysiert. Die Hydrolyse der Acetylgruppen führt zur Bildung von deacetyliertem Chitosan und Essigsäure. Essigsäure hat eine niedrige Verdunstungszahl und verdunstet schnell. Die freigewordenen Aminogruppen des Chitosans bilden mit Carbonylgruppen der BNC weitere Schiff-Base-Verbindungen.

Auf diesem Wege kann das Chitosanacetat in Chitosan zurückgewandelt werden, ohne dass zusätzliche Chemikalien oder Energie aufgebracht werden müssen. Wird z.B. Ameisensäure verwendet, kann diese über Hitzeeinwirkung oberhalb ihres Zersetzungspunktes von 101°C, ausgetrieben werden. In der Realität kann dieser Vorgang der Deacetylierung mittels Luftfeuchtigkeit mehrere Wochen bis Monate dauern. In den ersten Wochen nach Trocknung, liegt also eine Mischung zwischen Chitosan und Chitosanacetat im Material vor. Dieses geht mit der Zeit in eine reine Chitosan-BNC-Baumwolle Mischung über.

Der Vorgang ist zudem abhängig von der Schichtdicke des Chitosanacetat-BNC Films. Dünne Filme können bereits nach ca. 3 Wochen wasserfest sein.

Dennoch quillt die Oberfläche des Filmes nach einiger Zeit leicht auf. Das Wasser dringt durch Nanoporen etwas ein, verdunstet aber, bevor es sich weiter in den Film vorarbeiten kann. Möglicherweise sind auch nicht alle BNC Fasern von Chitosan umgeben. Wird der Chitosan-BNC Film dauerhaft Wasser ausgesetzt, so saugt er sich nach einiger Zeit voll. Dieses Verhalten ist im Hinblick auf den biologischen Abbau wünschenswert, können so doch Mikroorganismen schneller in das Material eindringen.

Von Vorteil ist bei dem hier vorliegenden Material, dass durch die Baumwollfasern zusätzlich "Lücken" im Material vorhanden sind, im Vergleich zum reinen Chitosanacetat-BNC Film. So kann mehr Luftfeuchtigkeit eindringen bzw. die Luftfeuchtigkeit besser durch das Material diffundieren und das Material wird auch im inneren deacetyliert.

Die oberste Schicht (Schicht 1) deacetyliert am schnellsten. Ist diese gleichmäßig verteilt und unbeschädigt, kann das Material bereits nach 3 bis 4 Wochen, eine für einen Alltagsgebrauch, ausreichend wasserabweisende Eigenschaften aufweisen.

Falls durch unsaubere Produktionsprozesse oder Beschädigungen Baumwollfasern aus der Oberfläche herausstehen, kann Wasser an diesen Fasern entlang ins Material eindringen. Je weiter die Deacetylierung im Inneren fortgeschritten ist, desto langsamer breitet sich dieses eingedrungene Wasser aus.

Optional kann das Material auch eine gewisse Zeit lang in ein Wasserband getaucht werden. Dort wird ebenfalls Essigsäure ausgespült. Beim anschließenden Trocken verdunstet weitere Essigsäure. So kann der Prozess der Deacetylierung beschleunigt werden.

Baumwollvlies und Fasern können vor Verwendung mit natürlichen Färbemitteln oder mineralischen Farbpigmenten gefärbt werden. Im besten Falle wird nur weiße Reißbaumwolle verwendet und danach gefärbt. Wird bereits farbige recycelte Baumwolle zugekauft, kann nicht ausgeschlossen werden, dass diese mit chemischen, nicht biologisch abbaubaren, Färbemitteln eingefärbt wurde. Dies würde die kunststofffreie Gesamtbilanz des Materials zunichtemachen.
Zudem bietet es sich an, die bakterielle Nanocellulose ebenfalls im selben Farbton einzufärben. Dies muss vor der Vermischung mit dem gelösten Chitosan geschehen. Die viskose Chitosanlösung erschwert die homogene Ausbreitung der Farbpigmente ansonsten erheblich.

Optional kann nun (oder bereits vor der Vermischung mit der BNC) ein natürlicher Weichmacher hinzugegeben werden. Häufig werden Zuckeralkohole wie Glycerin, Sorbit, Mannit, Xylit, Maltit etc., Polysorbate mit unterschiedlichem Polymerisationsgrad wie Polysorbat 20, Polysorbat 40 usw., Polyethylenglycole mit unterschiedlicher Molarer Masse, verschiedene Fettsäuren, Tenside und Polyole oder tief eutektische Lösungsmittel verwendet.

Insbesondere durch die Einbringung von Tensiden kann eine stark verbesserte Hydrophobizität erzielt werden.

Optional können auch Vernetzungsmittel hinzugegeben werden. Aufgrund der funktionellen Gruppen des Chitosan sind eine Vielzahl von verschieden Stoffen als Chitosan-Vernetzer erforscht. Bekannte Vernetzungsmittel für Chitosan sind z.B. Verbindungen der Dialdehyde sowie der Dicarbonsäuren.

Auch Tannine sind eine kostengünstige und einfache Methode um Chitosan-Cellulose Composite zu vernetzen.

Durch Vernetzung des Chitosan können ganz unterschiedliche Eigenschaftsverbesserungen eines reinen Chitosanfilms erzielt werden, sowohl hinsichtlich Festigkeit als auch Flexibilität.

Durch die zusätzlichen Vernetzungsmittel, kann die Verbindung zwischen dem Chitosan und der Nanocellulose verbessert werden.

Auch hier finden alle Schritte bei Raumtemperatur statt. Es wird keine zusätzliche Energiezufuhr in Form von Wärme benötigt. So soll der Energieverbrauch des Endmaterials niedrig gehalten werden.

Das nun durch das Verfahren erhaltene flache Sheet des Komposit-Materials ist bei üblicher Luftfeuchtigkeit relativ steif. Wird das Material sehr hoher Luftfeuchte ausgesetzt z.B. angehaucht, dringen Wassermoleküle in die Nanoporen der Chitosan-BNC Matrix und machen das Material geschmeidiger. Damit das Material auch bei üblicher Luftfeuchtigkeit flexibler wird, wird es in einer Rollenmaschine einer Behandlung unterzogen, bei der es mittels Förderbänder um dünne Rundstäbe bzw. Umlenkstäbe gezogen wird.

Dabei wird die Steife Chitosan-BNC Matrix aufgebrochen. An den Bruch-/Faltlinien wird das Material somit ohne den Einsatz von Weichmachern flexibel.
Bevorzugt kann nach Schritt 1.8 das fertige Material von der Trägerplatte entnommen werden und in weiteren Schritten, mittels der Rollenmaschine, Texturen mindestens in der Sichtseite des Materials erzeugt werden. Diese Texturen imitieren das Nabenbild eines tierischen Leders.

Die Rollenmaschine weist zwei in gleicher Richtung laufende Förderbänder auf, zwischen den das flächige Komposit-Material eingespannt wird. Durch eine Bewegung der Förderbänder über mindestens einen Umlenkstab können diese Texturen erzeugt werden. Nach einem einmaligen Durchlauf durch die Rollenmaschine wird das Material um 90° gedreht und durchläuft erneut die Rollenmaschine. So kann eine sich querende Textur erzeugt werden, die einer tierischen Narbung eines Leders ähnlich ist.

Aufgrund der Baumwollfasern ist die Chitosan-BNC Mischung hauptsächlich entlang der Fasern getrocknet. Dazwischen befinden sich viele kleine Hohlräume.

Da keine dicken Wandstärken der Chitosan-BNC Matrix entstehen, ist das Material flexibel genug die Nachbehandlung, ohne Einbußen hinsichtlich Festigkeit, zu überstehen. Auch die dünne oberste Schicht ist flexibel genug und bricht nicht auf.

Durch die erzeugten Falten entsteht eine hautähnliche Optik, wie man es von tierischem Leder kennt.

Optional kann das Material vor der Nachbehandlung leicht angefeuchtet werden, etwa durch einen feinen Wassersprühnebel.

Zusätzliche Luftfeuchtigkeit kann in das Material eindringen und die Deacetylierung wird beschleunigt bzw. verstärkt. Nach der Behandlung ist ein stärkerer Essigsäuregeruch aus dem Sheet wahrzunehmen als davor. Nach weiteren Tagen der Lagerung verschwindet dieser Geruch wieder. Die Deacetylierung ist damit aber noch nicht abgeschlossen.

Optional kann das Material auch mit einer biologisch abbaubaren kunststofffreien Beschichtung versehen werden, z.B. wenn zu befürchten ist, dass das Material großen abrasiven Kräften ausgesetzt ist. Die Beschichtung kann die natürliche Hydrophobie des Materials unterstützen, indem es die Oberfläche intakt hält. Dabei ist darauf zu achten, dass die Beschichtung auch für den Recyclingprozess geeignet ist. Die Beschichtung sollte möglichst dünn aufgetragen werden, da das Beschichtungsmaterial nach einem Recycling in Schicht 3 vorhanden ist und dort die Bindungskräfte zwischen Chitosan und BNC stören könnte.

Als optionale Beschichtungen kommen z.B. polymerisierende Öle wie Leinöl oder harte Wachse wie Carnaubawachs in Frage. Um die Beschichtung möglichst dünn aufzutragen, bietet sich ein Verdünnen in einem organischen Lösungsmittel wie z.B. Organgenterpene an. Aufgetragen wird die Beschichtung, indem mit einem getränkten Lappen einmal über das Material gewischt wird.

Maschinell könnte dies auch mittels Walzenauftragsmaschinen geschehen, wobei die Walze vom Lappen umschlungen ist, ähnlich wie bei einer Malerrolle. Nach der Beschichtung muss diese eine Zeit lang getrocknet werden.

Das Lederimitat kann vollständig recycelt und zu einem neuen Material geformt werden. Da Baumwolle ein Bestandteil des Lederimitats ist, können in das Endprodukt eingebrachte Baumwollelemente wie Fäden oder Stoffe mitrecycelt werden.

Produktionsabfälle, Verschnitt oder ausgediente, aus dem Material gefertigte Produkte, werden für das Recycling in kleine Stücke geschnitten. Eventuelle Reisverschlüsse oder andere Fremdkörper müssen jedoch vorher abgetrennt und entfernt werden.

Das zerkleinerte Lederimitat, welches an dem erfindungsgemäßen Komposit-Material gefertigt wurde, sowie kurze Fadenstücke und kleine Stoffreste werden eine Zeit lang in eine saure Lösung gegeben, wo der Vorgang des Protonierens von Chitosan erneut beginnt.

Die Säure reagiert mit den Aminogruppen des Chitosan und bildet das Chitosan-Salz. Im Falle von Essigsäure, wieder das Chitosanacetat. Die von Chitosan freiwerdenden BNC Elemente sind zwar wasserunlöslich, saugen sich aber mit der verdünnten organischen Säure voll. Es entsteht wieder eine viskose Chitosanacetat-BNC Masse, in welcher die einzelnen Baumwollfasern treiben. Dabei löst sich das Baumwollvlies unter leichter Scherung durch Umrühren in kleine Fasern auf.

Die Wasserstoffbrückenbindungen werden durch die freigesetzten Protonen der Essigsäure gebrochen. Die Schiff-Base-Verbindung wird durch saure Hydrolyse wieder aufgelöst.

Zusätzliche Elemente, wie z.B. Knöpfe die zuvor nicht ausgeschieden wurden, können nun aus der viskosen Masse ausgesiebt werden.

Die viskose Masse kann nun wieder als dritte Schicht in der Produktion verwendet werden. Kleinere Stoffreste oder Nähfäden sind aufgrund der zweiten Schicht nicht zu sehen. Ein neu geschaffenes Lederimitat aus recyceltem altem Lederimitat ist von einem neuen Lederimitat nicht zu unterscheiden, wenn es von vorne betrachtet wird. Von vorn ist der Blick auf die erste und zweite Schicht gerichtet.

Das komplette Recycling von Endprodukten ist stark von den zusätzlich verwendeten Materialen und Formen abhängig. Hier ist vor allem bereits beim Design darauf zu achten, dass nur zum Recycling passende Materialen und Formen verwendet werden.

Zur Herstellung eines 10cm auf 10cm großen Material Sheets werden nun verwendet:
20g gelöstes Chitosan (CS)
20g BNC-Brei
1,2g recycelte Baumwollfaser - von den recycelten Baumwollfasern werden 1/3 Gew.% auf 2-4mm geschnitten. 2/3 Gew.% behalten die ursprüngliche Länge von 10-30mm.

Zur Herstellung der CS-BNC Mischung werden beide Zutaten in einem Behälter 5 Minuten verrührt.

Von den 40g CS-BNC werden nun 5g auf die Trägerplatte gegeben, für Schicht 1 und 2. 35g werden mit den 1,2g Baumwolle 5 Minuten verrührt für Schicht 3. Alle Prozessschritte finden bei Raumtemperatur statt. (in Praxis bisher ca. 16°C bis 22°C)

Durch die Wasserbeständigkeit, ist zudem eine Kantenversiegelung, wie bei einigen anderen kunststofffreien Lederimitaten bekannt ist, nicht notwendig. Das Material ist einige Zeit wasserdicht. Danach dringt Wasser durch Nanoporen ein und ermöglicht/begünstigt einen eventuellen biologischen Abbauprozess.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine schematische Ansicht des Schichtaufbaus
- Figur 2:: Blockdarstellung der Herstellungsschritte
- Figur 3:: Auftragung von PEC auf die Trägerplatte
- Figur 4: Auflegung des Vlieses auf PEC
- Figur 5:: schematische Ansicht des Schichtaufbaus bestehend aus 2 Schichten
- Figur 6:: Auftragung des Gemischs auf das Vlies
- Figur 7:: eine schematische Ansicht des Schichtaufbaus
- Figur 8:: Zerteilung des Komposit-Materials
- Figur 9:: Recycling zur Herstellung eines neuen Gemisches
- Figur 10:: perspektivische Ansicht der Rollenmaschine
- Figur 11:: Seitenansicht der Rollenmaschine
- Figuren 12a-c:: Schritte der Texturerstellung
- Figur 13:: Herstellungsstraße

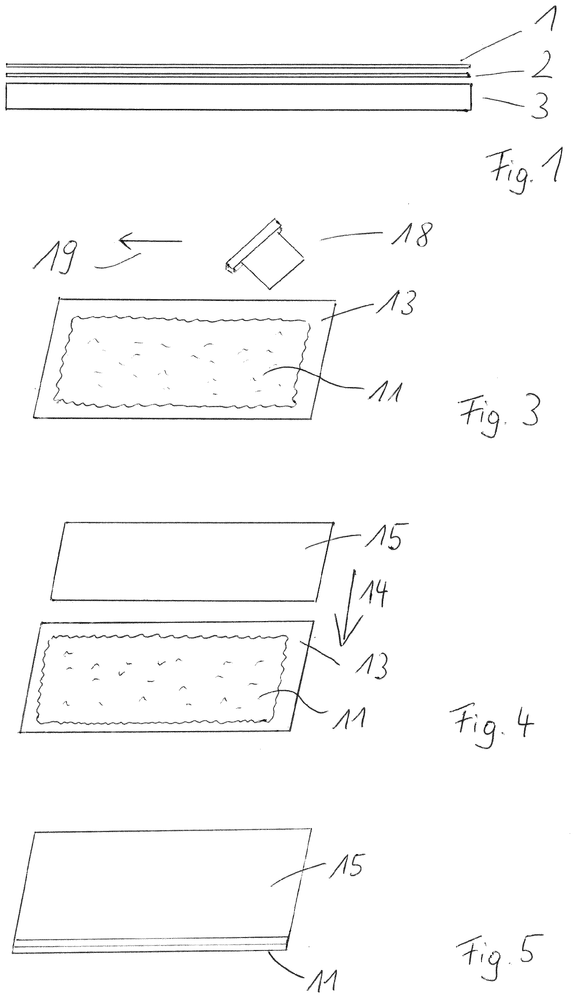

Figur 1 zeigt den Schichtaufbau, welcher drei Schichten umfasst. Die erste und oberste Schicht 1 ist sehr dünn und besteht nur aus Chitosan und der bakteriellen Nanocellulose. Die zweite Schichte 2 ist ein dünnes Vlies aus Baumwollfasern, welche auch in recycelter Form vorliegen können. Die dritte Schicht 3 besteht aus einer Chitosan-BNC-Mischung.

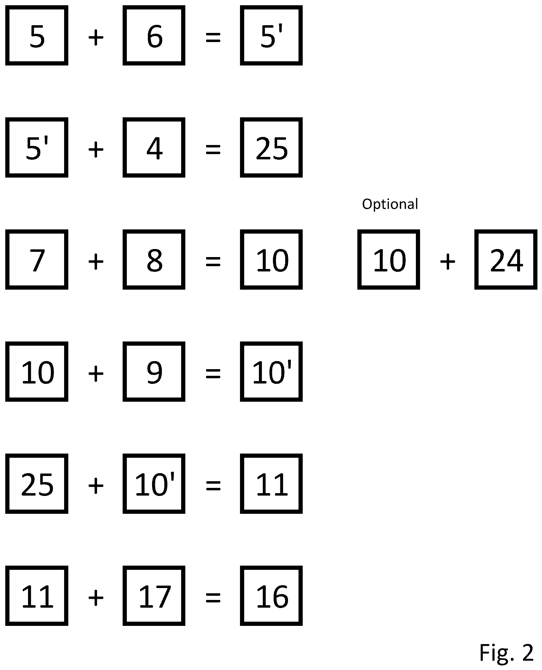

Figur 2 zeigt in vereinfachter Blockanordnung die Herstellung der Bestandteile für das lederähnliche Komposit-Material 26.

Zunächst wird Essigsäure 5 mit Wasser 6 gemischt, bis man eine verdünnte Essigsäure 5' erhält, beispielsweise 1% Essigsäure mit einem gewünschten pH-Wert von drei.

In dieser verdünnten Essigsäure 5' wird dann das pulverförmige Chitosan 4 gelöst, bis sich eine Lösung 25 ergibt.

Optional kann zum Wasser 6 Farbpigment 24 gegeben werden.

Zusätzlich wird ein an einer Oberfläche eines Nährmediums in einem Bottich vorhandene Film aus bakterieller Nanocellulose 7 aus dem Bottich entnommen, mit Wasser gereinigt und mit Wasser 8 vermischt bis sich eine Mischung 10 ergibt.

Diese Mischung 10 wird in einem Mixer 9 zerkleinert bis sich eine homogene Mischung 10' ergibt.

Anschließend wird die Lösung 25 mit der homogenen Mischung 10' vermengt bis sich ein Polyelektrolytkomplex 11 ergibt.

Zu diesem Polyelektrolytkomplex 11 werden ein Büschel loser Baumwollfasern 17 (optional recycelt) verrührt, so dass sich ein Chitosan-Cellulose-Baumwollfasergemisch 16 ergibt.

Für diesen Schritt wird einem Teil der Chitosan-BNC Mischung 11 unter ständigem Rühren die losen Baumwollfasern 17 hinzugegeben.

Um später eine homogenere Schicht zu erreichen kann ein Teil der Baumwollfasern vor dem Vermischen noch auf eine kürzere Faserlänge geschnitten werden.

Optional kann zur Mischung 10 und / oder zum Wasser 8 ein Farbpigment 24 hinzugefügt werden.

Die Figur 3 zeigt wie der Polyelektrolytkomplex 11 auf der Trägerplatte 13 flach ausgestrichen wird. Beispielsweise durch eine Spachtel 18, welche in Pfeilrichtung 19 den Polyelektrolytkomplex 11 verteilt. Alternativ kann dieses Verstreichen auch mittels einer Rolle geschehen.

Die nächste Figur 4 zeigt, wie auf den nun flach ausgestrichenen Polyelektrolytkomplex 11 das Vlies 15 in Pfeilrichtung 14 aufgelegt wird, so dass, gemäß Figur 5, ein Schichtaufbau, bestehend aus Polyelektrolytkomplex 11 und Vlies 15, vorliegt.

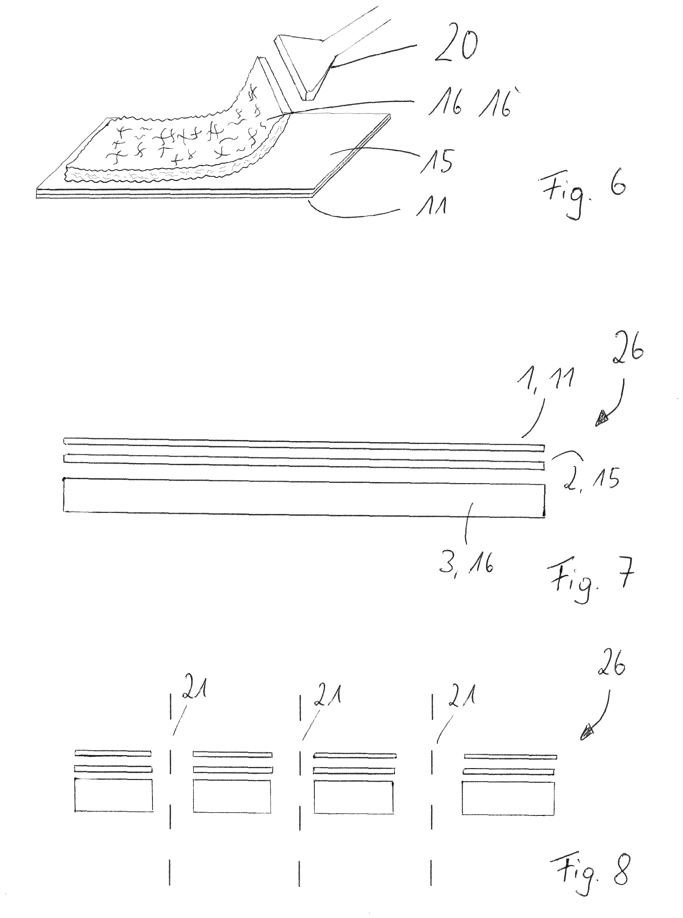

Auf diesen Schichtaufbau wird, gemäß Figur 6, mittels einer Düse 20, beispielsweise einer Breitschlitzdüse, das Gemisch 16 aufgetragen.

Figur 7 zeigt den finalen Schichtaufbau 1, 2, 3 des Komposit-Materials 26, wobei die Schicht 1 aus dem Polyelektrolytkomplex 11, die Schicht 2 aus dem Vlies 15 und die Schicht 3 aus dem Gemisch 16 gebildet wird.

In Figur 8 ist der Zerkleinerungsvorgang, schematisiert über die Schnittlinien 21, dargestellt. So wird mittels Schnitten entlang beliebiger Schnittlinien 21 das vorliegende Material 26 zerschnitten.

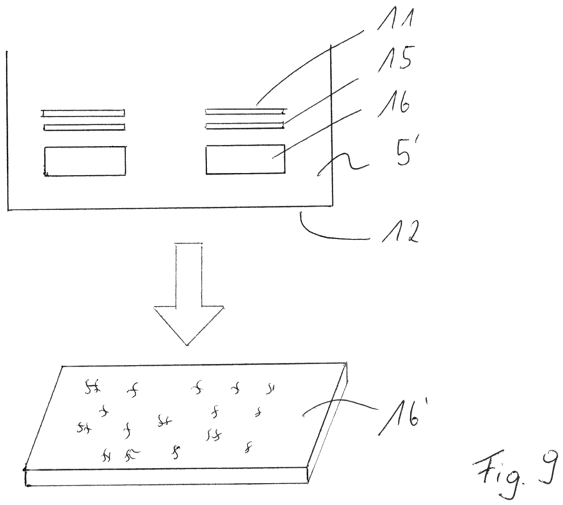

Gemäß Figur 9 werden die zerkleinerten Schichten 11, 15, 16 in einen Behälter 12 mit verdünnter Essigsäure 5' gegeben. Mit den bekannten vorherigen Schritten kann nun wieder ein Gemisch 16 erzeugt werden, welches nun als recyceltes Gemisch 16' vorliegt. Dieses Gemisch 16' kann nun wieder als 3. Schicht in einen Schichtaufbau integriert werden.

Diese Recyclingmöglichkeit ist eine wesentliche Eigenschaft der vorliegenden Erfindung.

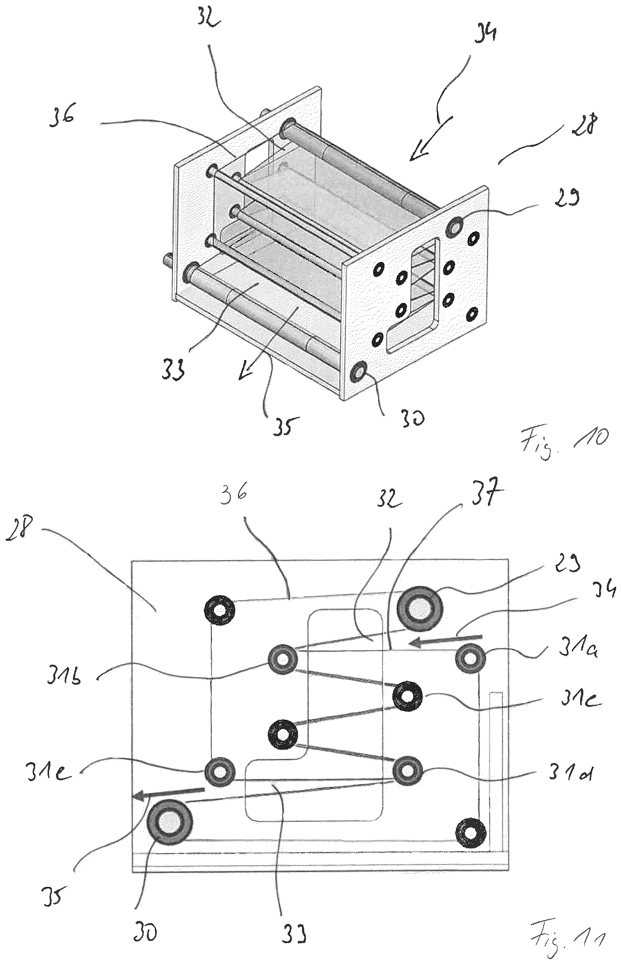

Figur 10 und 11 zeigt eine Rollenmaschine 28, welche in einer bevorzugten Ausführungsform dazu dient, eine lederähnliche Textur in die Sichtseite 27 des Komposit-Materials 26 einzubringen.

Die Rollenmaschine 28 umfasst zwei Förderbänder 36, 37, welche als Endlosbänder um die Anfangs- und Endrolle 29, 30 sowie einer Anzahl von drehbar gelagerten walzenförmigen Umlenkstäben 31, 31a-e geführt sind. Zur besseren Erläuterung wird das Förderband, welches um die Anfangsrolle 29 in Richtung eines Umlenkstabs 31b geführt ist, als Förderband 36 beschrieben und das Förderband, welches um den unterhalb der Anfangsrolle 29 angeordneten Umlenkstab 31a in Richtung des Umlenkstabs 31b geführt ist, als Förderband 37 beschrieben. Durch die Zuführung der Förderbänder 36 und 37 in Richtung des Umlenkstabs 31b verjüngt sich der zunächst zwischen 29 und 31a bestehende Förderspalt 32, bis bei dem Umlenkstab 31b sich die Förderbänder 36 und 37 berühren und anschließend um den Umlenkstab 31b sowie fortfolgende 31b bis 31d als Doppelförderband geführt werden.

Zunächst wird das Material 26 in Pfeilrichtung 34 in die Maschine eingeführt und zwar in den Förderspalt 32, der zwischen der Anfangsrolle 29 und dem Umlenkstab 31a besteht. Durch Führung als Doppelförderbandes, beginnend im Bereich des Umlenkstabs 31b, wird das Material 26 zwischen den beiden Förderbändern 36 und 37 eingespannt und um die jeweiligen Umlenkstäbe 31b bis 31d geführt. Durch diese Beanspruchung verändert sich die Sichtseite 27 des Materials und durch die zwanghafte Dehnung und Stauchung kann eine Textur 22, 23 eingebracht werden. Am Ende des Durchgangs verlässt das Material 26 in Pfeilrichtung 35 die Rollenmaschine 28, wobei sich wieder ein Förderspalt 33, ausgehend von dem Umlenkstab 31d, dem Abstand zwischen der Antriebsrolle 30 und einem oberhalb davon angeordneten Umlenkstab 31e auftut. Die Förderbänder 36, 37 trennen sich hier und werden erst am Ende des obigen Förderspaltes 32 wieder zusammengeführt.

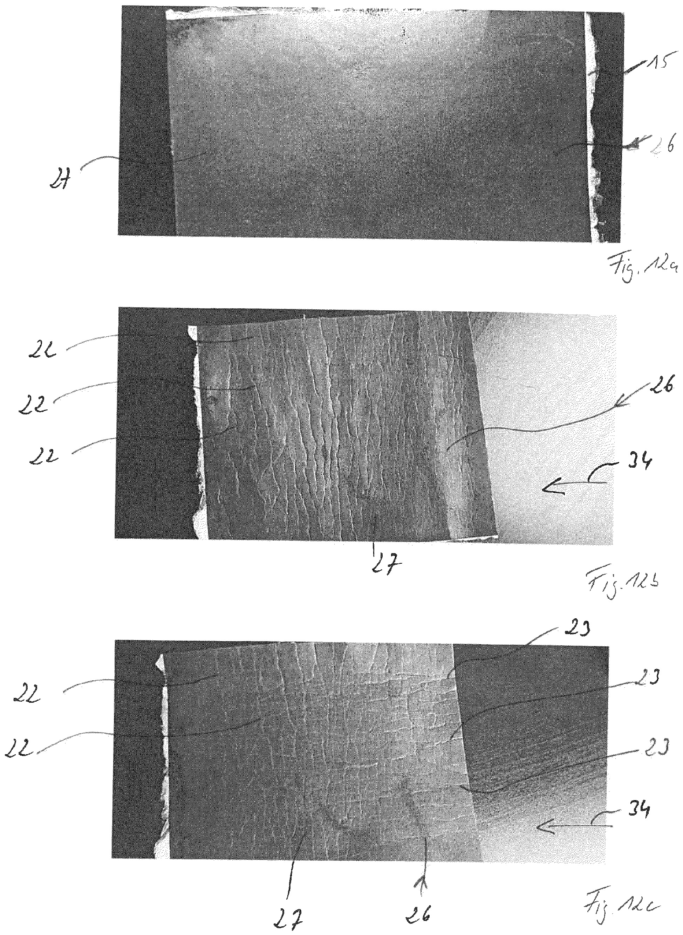

Bei einmaligem Durchfördern ändert sich das Aussehen der Sichtseite 27, wie sie zunächst als glatte Fläche in Figur 12a dargestellt ist, zu einer Oberfläche mit den narbenartigen Texturen 22, die sich in Längsrichtung des Materials 26 erstrecken. Bei einem einmaligen Durchlauf durch die Rollmaschine 28, bilden sich diese Texturen 22 quer zur Pfeilrichtung 34, d. h. entsprechend der Anordnung der Umlenkstäbe. Zur besseren Veranschaulichung wurde daher in den Figuren 12b und 12c die Pfeilrichtung 34 eingetragen. Um ein noch besseres und lederähnliches Resultat zu erzielen, wird das Material um 90° gedreht und dann wieder in Pfeilrichtung 34 in die Rollenmaschine 28 eingeführt. Durch diese Drehung des Materials können nun weitere Texturen 23 quer zur Pfeilrichtung 34 in die Oberfläche eingebracht werden. Da das Material um 90° gedreht wurde verlaufen diese Texturen 23 quer zu den zuvor eingebrachten Texturen 22.

Die Umlenkstäbe 31a bis e haben beispielsweise einen Durchmesser von 10mm bis 15mm. Durch die Umlenkung des Materials wird die CS-BNC Matrix aufgebrochen und das Komposit-Material 26 wird flexibler und erhält die spätere Optik.

Figur 12a zeigt die Sichtseite 27 des lederähnlichen, geschichteten Komposit-Material 26, nach dem Abziehen von der Trägerplatte. Unterhalb der Sichtseite 27, welches gebildet wird von dem Polyelektrolytkomplex 11, erkennt man noch das Vlies 15, als zweite Schicht. Figur 12b zeigt, wie sich die Sichtseite nach einem einmaligen Durchlauf verändert und Figur 12c nach einem weiteren Durchlauf, wobei gegenüber der Darstellung nach 12b das Material um 90° vor der Durchführung durch die Rollenmaschine 28 gedreht wurde.

Figur 12c zeigt das Material 26 als Endprodukt mit den charakteristischen Texturen 22, 23, welche kreuzend auf der Oberfläche verlaufen und der strukturierten Narbenschicht eines tierischen Leders ähneln.

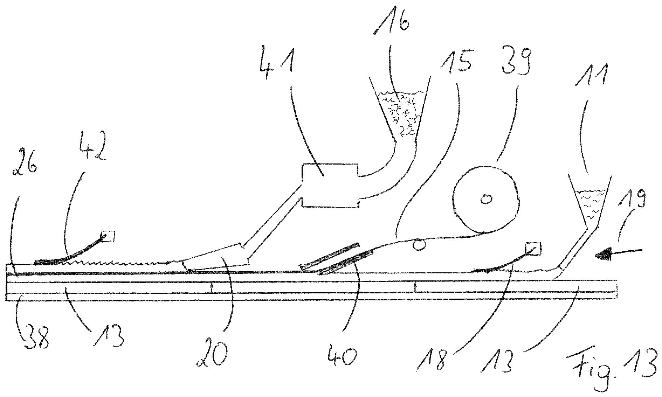

Figur 13 zeigt ein Ausführungsbeispiel zur Herstellung des lederähnlichen Materials 26. Die Trägerplatte 13 wird von einem Förderband 38 kontinuierlich in Pfeilrichtung 19 angeschoben. Mehrere Trägerplatten 13 sind dabei ohne Abstand zueinander hintereinander auf dem Förderband 38 angeordnet.

Zuerst wird die CS-BNC Mischung 11 in Pfeilrichtung 14 aufgetragen und flach auf der Trägerplatte 13 durch eine Verstreichvorrichtung, z.B. Spachtel 18, verteilt. Danach wird das Vlies 15 von der Vliesrolle 39 abgewickelt und mittels einer Aufbringungsvorrichtung 40 sanft auf die Schicht 11 angedrückt. Nun trocknet die Mischung 2 bis 3 Tage.

Eine Pumpe 41 pumpt die CS-BNC-Baumwoll Mischung 16 in die Schlitzdüse 20. Diese trägt die Mischung 16 flach auf das Vlies 15 auf. Mit Spachteln 42 wird die Masse anschließend geglättet. Nun folgt eine weitere mehrtägige Trocknungsphase bei Raumtemperatur. Das so hergestellte Komposit-Material 26 kann nun von der Trägerplatte 13 entnommen werden.

### Zeichnungslegende

- 1: Schicht
- 2: Schicht
- 3: Schicht
- 4 5,: Chitosan
- 5': Essigsäure (5' verdünnte Essigsäue)
- 6: Wasser
- 7: BNC
- 8: Wasser
- 9: Mixer
- 10, 10': Mischung (10' homogene Mischung)
- 11: Polyelektrolytkomplex (PEC)
- 12: Behälter
- 13: Trägerplatte
- 14: Pfeilrichtung
- 15: Vlies (Baumwollvlies)
- 16, 16': Gemisch (16' recyceltes Gemisch)
- 17: Baumwollfasern
- 18: Spachtel
- 19: Pfeilrichtung
- 20: Düse
- 21: Schnittlinie
- 22: Textur
- 23: Textur
- 24: Farbpigmente
- 25: Lösung
- 26: Komposit-Material
- 27: Sichtseite
- 28: Rollenmaschine
- 29: Anfangsrolle
- 30: Endrolle
- 31a-e: Umlenkstäbe
- 32: Förderspalt
- 33: Förderspalt
- 34: Pfeilrichtung
- 35: Pfeilrichtung
- 36: Förderband
- 37: Förderband
- 38: Förderband
- 39: Vliesrolle
- 40: Aufbringungsvorrichtung
- 41: Pumpe
- 42: Spachtel

## Patentansprüche

1. Verfahren zur Herstellung eines lederähnlichen geschichteten Komposit-Materials (26), umfassend die folgenden Schritte:
1.1 Zugabe und Lösen von pulverförmigen Chitosan (4) in verdünnter Säure (5') zur Erzeugung einer Lösung (25),
1.2 Zerkleinern und Mischen von bakterieller Nanocellulose (7) mit Wasser (8) zur Erzeugung einer Mischung (10, 10'),
1.3 Verrühren der Lösung (25) und der Mischung (10, 10') zur Erzeugung eines Polyelektrolytkomplex (11),
1.4 flächiges Auftragen einer ersten Teilmenge des Polyelektrolytkomplexes (11) auf eine Trägerplatte (13),
1.5 Auflegen eines Vlieses (15) auf den zuvor aufgetragenen Polyelektrolytkomplex (11)
1.6 Zugabe und Verrühren von Naturfasern (17) in eine zweite Teilmenge des Polyelektrolytkomplexes (11) und Verrühren zur Erzeugung eines Gemisches (16, 16')
1.7 flächiges Auftragen des Gemisches (16, 16') auf die Oberseite des Vlieses (15)
1.8 Trocknungsvorgang und
1.9 Entnahme des fertigen Komposit-Materials (26)

2. Verfahren nach Anspruch 1, **dadurch gekennzeichnet, dass** das Polyelektrolytkomplex (11) in Schritt 1.4, mit einer Dicke, zwischen 1mm und bis 5mm flächig auf die Trägerplatte (13) aufgetragen wird.

3. Verfahren nach Anspruch 1 oder 2, **dadurch gekennzeichnet, dass** in das fertige Material (26) durch ein Walz- und Rollverfahren Texturen (22, 23) eingebracht werden.

4. Verfahren nach einem der Ansprüche 1 bis 3, **dadurch gekennzeichnet, dass** die Säure eine verdünne Essigsäure (5') ist.

5. Verfahren nach einem der Ansprüche 1 bis 4, **dadurch gekennzeichnet, dass** aus der Mischung von Essigsäure (5') und Chitosan (4) Chitosanacetat gebildet wird, welches durch einen weiteren Verfahrensschritt deacetyliert wird, um die Wasserbeständigkeit des Materials (26) zu steigern.

6. Verfahren nach einem der Ansprüche 1 bis 4, **dadurch gekennzeichnet, dass** im Schritt 1.1 oder auf das Vlies (15) vor Schritt 1.7 ein Farbpigment (24) zugemischt wird.

7. Verfahren nach einem der Ansprüche 1 bis 6, **dadurch gekennzeichnet, dass** die Naturfasern Baumwollfasern (17) oder Hanffasern oder Leinenfasern oder Sisalfasern mit einer Faserlänge von 1mm bis 100mm sind.

8. Verfahren nach einem der Ansprüche 1 bis 7, **dadurch gekennzeichnet, dass** Zuckeralkohole wie Sorbit, Xylit, Isomalt oder Glycerin als Feuchtehaltemittel enthalten sind.

9. Verfahren nach einem der Ansprüche 1 bis 8, **dadurch gekennzeichnet, dass** Herstellung und Lagerung bei Raumtemperatur erfolgt.

10. Verfahren nach einem der Ansprüche 1 bis 9, **dadurch gekennzeichnet, dass** nach Schritt 1.9 das fertige Material (26) von der Trägerplatte (13) entnommen wird und in weiteren Schritten mittels einer Rollenmaschine (28) Texturen (22, 23) mindestens in der Sichtseite (27) des Materials (26) erzeugt werden.

11. Verfahren nach Anspruch 10, **dadurch gekennzeichnet, dass** die Rollenmaschine (28) zwei in gleicher Richtung laufende Förderbänder (36, 37) aufweist, zwischen den das flächige Komposit-Material (26) eingespannt wird, und durch eine Bewegung der Förderbänder (36, 37) über mindestens einen Umlenkstab (31a-e) die Texturen (22, 23) erzeugt werden.

12. Verfahren nach Anspruch 10 oder 11, **dadurch gekennzeichnet, dass** das flächige Komposit-Material (26) nach einem einmaligen Durchlauf durch die Rollenmaschine (28) um 90° gedreht wird und dann erneut durch die Rollenmaschine (28) durchläuft.

13. Lederähnliches Komposit-Material (26) bestehend aus einer ersten unterseitigen Schicht (1) aus einem Polyelektrolytkomplex (11), auf das als zweite Schicht (2) ein Vlies aufgelegt ist und auf dessen Oberseite, als dritte Schicht (3) ein mit Naturfasern angereicherter weiterer Polyelektrolytkomplex (11) aufgetragen ist.

14. Lederähnliches Komposit-Material (26) nach Anspruch 13, **dadurch gekennzeichnet, dass** es mit einem Verfahren nach mindestens einem der Ansprüche 1 bis 10 hergestellt ist.

15. Lederähnliches Material (26) hergestellt nach einem der Ansprüche 1 bis 14, wobei das Material (26) vollständig recyclebar ist.
